# NEUE EUROPÄISCHE PATENTSCHRIFT

(11) **EP 2 576 477 B3**
(45) Veröffentlichungstag dieser Patentschrift: **01.07.2015**
(45) Hinweis auf die Patenterteilung: 18.06.2014
(21) Anmeldenummer: 11706816.3
(22) Anmeldetag: 04.03.2011
(51) Int. Cl.: C04B 28/00, C08J 7/04, C08K 3/36, C09D 4/00, C09D 183/04, C09J 5/02

(54) **GRANULARER BIMS SOWIE VERFAHREN ZUR HERSTELLUNG VON GRANULAREM BIMS**
GRANULAR PUMICE AND METHOD FOR PRODUCING GRANULAR PUMICE
PONCE GRANULAIRE ET SON PROCÉDÉ DE FABRICATION

(30) Priorität: 26.05.2010 DE 102010021532
(43) Veröffentlichungstag der Anmeldung: 10.04.2013
(60) Teilanmeldung: 13171174.9
(73) Patentinhaber: Evonik Degussa GmbH, 45128 Essen (DE); Rotec Rohstoff-Technik GmbH & Co. KG, 56220 Urmitz (DE)
(72) Erfinder: ROOS, Markus, 45289 Essen (DE); RUNKEL, Guido, 56581 Melsbach (DE)
(74) Vertreter: Blaumeier, Jörg
(86) Internationale Anmeldenummer: PCT/EP2011/053287
(87) Internationale Veröffentlichungsnummer: WO 2011/147599

(56) Entgegenhaltungen:
- DE-A1- 2 046 395
- DE-A1- 2 049 361
- DE-A1- 2 142 879

## Beschreibung

Granularer Bims wird primär als Leichtzuschlag für unterschiedlichste bau- und bauchemische Produkte eingesetzt. Zu nennen sind Putze und Mörtel, Feinbetone, Fassaden- und Leichtbauplatten sowie Brand- und Schallschutzplatten, Dämmprodukte und Ähnliches. Aber auch als Leichtzuschlag für Kunststoffe kommt granularer Bims zum Einsatz. Die Vorteile des granularen Bimses liegen in seinem sehr niedrigen Gewicht, der hohen Druckfestigkeit sowie einer sehr guten Wärmedämmung. Er eignet sich auch gut zur Schallabsorption, zeigt eine hohe Atmungsaktivität, ist nicht brennbar und lösungsmittelfrei sowie geruchsneutral, darüber hinaus zu 100 % mineralisch sowie recyclingfähig.

Allerdings zeigt Bims als mineralisches, poröses Naturprodukt eine gewisse Wasseraufnahmefähigkeit. Hieraus resultiert, dass bei Verwendung des Bimses als Leichtzuschlag überall dort, wo Wasser zum Anmachen verwendet wird, etwas mehr Wasser zuzumischen ist, verglichen mit einem kein oder ein deutlich geringeres Wasseraufnahmevermögen aufweisenden Leichtzuschlag, wie beispielsweise den ebenfalls häufig verwendeten silikatischen Schäumen. Hieraus resultiert auch, dass die Ergiebigkeit der angesetzten Masse mit dem zugegebenen Bims etwas geringer ist als die Ergiebigkeit einer Masse mit beispielsweise silikatischem Schaum als Leichtzuschlag.

Der Erfindung liegt damit das Problem zugrunde, einen granularen Bims anzugeben, dessen Eigenschaften insbesondere im Hinblick auf eine Verwendung als Leichtzuschlag zu einer mit einer Flüssigkeit anzumachenden Masse verbessert ist.

Zur Lösung dieses Problems ist ein granularer Bims mit den Merkmalen des Anspruchs 1 vorgesehen.

Der erfindungsgemäße granulare Bims, der von Haus aus als natürliches Material ein gewisses Wasseraufnahmevermögen besitzt, ist erfindungsgemäß mit einer hydrophoben Oberflächenschichtung belegt, mithin also hydrophobiert. Diese durch eine entsprechende Behandlung des Bimses aufgebrachte Oberflächenschicht bewirkt, dass die Bimsgranule vollkommen hydrophob ist und ihre hydrophobe Eigenschaft auch beibehält, was Langzeitversuche gezeigt haben. Die hydrophobe Oberflächenbeschichtung verleiht folglich dem erfindungsgemäßen granularen Bims eine bisher nicht gegebene Eigenschaft, die sich entscheidend auf das Einsatzspektrum des Bimses respektive auf die Eigenschaften der Produkte, denen der erfindungsgemäße Bims zugeschlagen ist, auswirkt. Zum einen kann der erfindungsgemäße hydrophobierte Bims in unterschiedlichsten flüssigen oder ein Fluid wie beispielsweise ein Anmachwasser und Ähnliches oder ein Lösemittel oder dergleichen enthaltenden Systemen verwendet werden. Zu nennen sind Fliesen- oder Plattenkleber, Leichtputze, Spachtelarmierungsmörtel, aber auch Lacke, Farben sowie pastöse Systeme. Viele dieser Systeme werden nicht erst vor Ort angemacht, sondern werden bereits werkseitig angemacht und abgefüllt, so dass sichergestellt werden muss, dass sie ihre fluiden oder pastösen Eigenschaften für lange Zeit unverändert beibehalten. Dies kann durch Verwendung des erfindungsgemäßen granularen hydrophobierten Bimses vorteilhaft gewährleistet werden, im Unterschied zur Verwendung von silikatischem Schaum, der wie beschrieben ein wenngleich geringes Wasseraufnahmevermögen besitzt. Darüber hinaus lässt der Umstand, dass der erfindungsgemäße Bims keinerlei Wasseraufnahmevermögen mehr besitzt, eine genauere Einstellung des Wasserzementwertes bei Verwendung des Bimses als Leichtzuschlag zu Mörtel und ähnlichen Massen zu. Ferner kann die Kornrohdichte des erfindungsgemäßen Bimses, verglichen mit reinem Bims, deutlich reduziert werden, und zwar von ca. 0,9 kg/dm³ für nicht hydrophobierten Bims auf ca. 0,5 kg/dm³ für erfindungsgemäßen hydrophobierten Bims. Dies führt zu einer erhöhten Ergiebigkeit und einer geringeren Trockenrohdichte beispielsweise des Mörtels oder Fliesenklebers, der mit dem erfindungsgemäßen Bims versetzt ist. Auch kann durch die hydrophobe Eigenschaft des Bimses eine verbesserte Verteilung desselben in zementgebundenen Systemen erreicht werden, was eine verbesserte weil homogene Hydrophobierung des Endprodukts ermöglicht. Das heißt, das Wasseraufnahmevermögen des Endprodukts ist geringer verglichen mit anderen Leichtzuschlägen.

Insgesamt bietet der erfindungsgemäße granulare hydrophobierte Bims eine essentielle Erweiterung des Eigenschafts- und damit auch des Einsatzspektrums.

Der Bims ist erfindungsgemäß mit einer Silan- und Siloxanschicht, die hydrophob ist, belegt. Eine solche Silan- beziehungsweise Siloxanschicht kann unter Verwendung verschiedener Silane beziehungsweise Siloxane, seien es cyclische oder lineare Silane beziehungsweise Siloxane, aufgebracht werden, wobei insbesondere die linearen oder verzweigten Silane oder deren Mischungen beziehungsweise Siloxane, die praktisch unlöslich in Wasser sind, geeignet sind. Hierunter sind beispielsweise Silikonharze beziehungsweise Silikonharzlösungen, oligomere sowie polymere Siloxane zu verstehen. Auch die Verwendung von Silikonen ist möglich. Im Allgemeinen lässt sich jedwede Art von Alkylpolysiloxanen und/oder Alkylalkoxysilanen sowie Siloxangemische aus reaktiven Organosiloxanen und Polydimethylsiloxanen als hydrophobe Beschichtung der Bimsoberfläche einsetzen. Unter diesen wird bevorzugt eine Mischung aus reaktiven Organosiloxanverbindungen und Polydimethylsiloxanen, besonders bevorzugt als Emulsion vorliegend, zur Bildung der Beschichtung verwendet.

Der Bims kann ergänzend auch mit einer Beschichtung aus wenigstens einer organischen Fettsäure oder wenigstens einem Salz einer organischen Fettsäure belegt sein. Hierunter fallen beispielsweise Stearinsäure beziehungsweise verschiedene Salze der Stearinsäure, das heißt Stearate (z.B. Na-, K-, Ca-, Al-, Zn-, Zr-, NH₄-Stearat oder Trieethanolammoniumstearat) Ölsäure beziehungsweise verschiedene Salze der Ölsäure, das heißt Oleate (z. B. Na-, NH₄-Oleat), aber auch Tallölfettsäure beziehungsweise deren Salze sowie Harzsäuren beziehungsweise Salze der Harzsäuren.

Ergänzend kann die Beschichtung der Bimsoberfläche auch aus einem Mineralöl oder einer Mineralölemulsion bestehen. Mineralöle bestehen im Wesentlichen aus einem Gemisch aus paraffinischen, naphthenischen und aromatischen Bestandteilen sowie Alkenen.

Es ist ferner ergänzend möglich, dass die Beschichtung der Bimsoberfläche aus wenigstens einem Alkan besteht. Hierunter sind auch Wachse und Wachsölemulsionen, gegebenenfalls auf Paraffinbasis zu verstehen. Auch PE/HDPE-Wachse, Mikrowachse, Fischer-Tropsch-Wachse, Montanwachse, Esterwachse, Amidwachse, natürliche Wachse, Carnauba-Wachse, PTFE-Wachse, Wachs-Compounds, Polymer-Wachs-Compounds oder PP-Wachse sind denkbar.

Ergänzend kann die Bimsoberfläche auch mit einer Beschichtung aus Bitumen oder einer bituminösen Emulsion bestehen. Diese weist ebenfalls ein stark wasserabweisendes beziehungsweise hydrophobes Verhalten auf.

Neben dem erfindungsgemäßen Bims selbst betrifft die Erfindung ein Verfahren zur Herstellung von Bims der beschriebenen Art. Das erfindungsgemäße Verfahren zeichnet sich durch die Merkmale des Anspruchs 6 aus. Das Hydrophobierungsmittel wird bevorzugt als Emulsion eingesetzt.

Wenngleich die Möglichkeit besteht, den Bims durch Tauchen in die Emulsion zu benetzen, mithin also den Bims in eine hinreichend große Emulsionsmenge zu schütten, dort zu rühren und die Emulsion respektive das Hydrophobierungsmittel aufziehen bzw. anbinden zu lassen, und den Bims nach einer hinreichenden Einwirkzeit zu entnehmen, abtropfen zu lassen und zu trocknen, sieht eine zweckmäßige Weiterbildung der Erfindung vor, die Hydrophobierungsemulsion oder deren Verdünnung aufzusprühen. Das Aufsprühen erfolgt zweckmäßigerweise während der Bims gemischt wird. Das heißt, dass der Bims kontinuierlich beispielsweise in einem Pflugscharmischer gemischt und hierbei kontinuierlich oder intermittierend mit einer geeigneten Aufsprüheinrichtung die Emulsion aufgesprüht wird, die infolge der kontinuierlichen Mischung untergemischt wird und sich so fein und homogen auf der Oberfläche der Bimsgranulen verteilt. Ist die bezogen auf die zu behandelnde Bimsmenge abgemessene Emulsion, die in hinreichender Menge, ebenfalls abgestimmt auf die zu behandelnde Bimsmenge, zugegebenes Hydrophobierungsmittel enthält, vollständig aufgesprüht und untergemischt, so kann zur weiteren Homogenisierung der Emulsionsverteilung noch weitergemischt werden. Am Ende des Mischens wird der Bims getrocknet, um die äußere Phase der Emulsion auszutreiben, mithin also das Wasser zu verdunsten, so dass sich die wasserfreie Hydrophobierungsschicht ausbildet.

Die grundsätzliche Mischdauer sollte zwischen 1 Minuten - 25 Minuten, insbesondere zwischen 10 Minuten - 15 Minuten betragen, wobei nur während eines Teils der gesamten Mischdauer die Emulsion aufgesprüht wird. Beispielsweise kann bei einer Gesamtmischzeit von 20 Minuten das Aufsprühen während der ersten 5 Minuten erfolgen, und anschließend zur Homogenisierung der Emulsions- respektive Hydrophobierungsmittelverteilung noch für weitere 15 Minuten gemischt werden.

Das Ausheizen, also das Trocknen des Bimses erfolgt zweckmäßigerweise bei einer Temperatur zwischen 0° - 200 °C, vorzugsweise bei 130° - 180 °C, so dass sichergestellt ist, dass das in der Regel als äußere Phase verwendete Wasser schnellstmöglich ausgetrieben wird. Eine bevorzugte Trocknungstemperatur beträgt etwa 150°C.

Als Hydrophobierungsmittel wird erfindungsgemäß zumindest ein Silan und zumindest ein Siloxan verwendet, wobei wie bereits beschrieben sowohl cyclische als auch lineare oder verzweigte Silane und deren Mischungen verwendet werden. Insbesondere lineare Silane beziehungsweise Siloxane zeigen keinerlei Wasserlöslichkeit.

Zudem ist die Verwendung eines oder mehrerer der vorweg genannten silan- und/oder siloxanbasierenden Stoffe möglich.

Erfindungsgemäß werden eingesetzt Gemische aus Silanen und Siloxanen, wobei verwendet werden
A1) Silan der allgemeinen Formel

   R³-Si-(OR²)₃

   wobei
   R² ein Methyl- oder Ethylrest ist und
   R³ ein Alkylrest mit 3 bis 12 Kohlenstoffatomen,
   oder ein Aminoalkylrest mit 1 bis 6 Kohlenstoffatomen, oder
   ein Rest der allgemeinen Formel H₂N-(CH₂)ₓR⁴-(CH₂)_{y}-, in der
   R⁴ einen Sauerstoff-, Schwefel-, -NH-
   oder
   -NH-CH₂-CH₂-NH-Rest bedeutet und
   x ≧ 2 und
   y ≧ 2 ist, oder
   ein Rest der allgemeinen Formel

   (R²O)₃Si-(CH₂)ₓ-NH-(CH₂)ₓ-,

   R² und x wie vorstehend definiert,
   oder 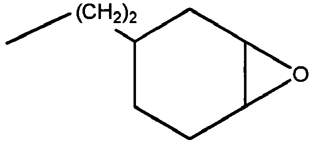 ist,
A2) ein Siloxanol der allgemeinen Formel 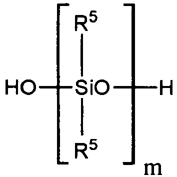 wobei
   R⁵ ein Methyl- oder Phenylrest ist, jedoch mindestens 90 % der Reste R⁵ Methylreste sind und m = 20 bis 250 ist,
   wobei ein Gemisch aus A1) und A2) besteht,
   wobei das Verhältnis von A1) zu A2) so gehalten ist, dass einer SiOH-Gruppe der Verbindung A2) > 1 bis 3 OR²-Gruppen der Verbindung A1) entsprechen und R² ein Alkylrest mit 1 bis 4 Kohlenstoffatomen ist. Beispiele für den Rest R² sind Methyl-, Ethyl-, Propyl- und der Butylrest. Bevorzugt ist der Methyl- und Ethylrest. Bestandteil A1) ist ein Alkoxysilan der allgemeinen Formel R³-Si-(OR²)₃. Während der Rest R² die bereits angegebene Bedeutung hat, ist der Rest R³ dadurch gekennzeichnet, dass er eine reaktive Gruppe hat und über Kohlenstoff mit dem Siliciumatom verbunden ist. R³ kann dabei folgende Bedeutung haben:
   (1) R³ = Aminoalkylrest, dessen Alkylrest 1 bis 6 Kohlenstoffatome aufweist. Beispiele solcher Reste sind der Ethyl-, Propyl-, Butyl- und Hexylaminrest, wobei die Reste

      -(CH₂)₃-NH₂ und

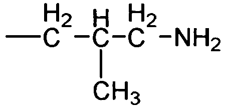

      bevorzugt sind.
   (2) R³ = Rest der allgemeinen Formel H₂N-(CH₂)ₓR⁴-(CH₂)_{y}-, in der R⁴ einen Sauerstoff-, Schwefel-, -NH- oder -NH-CH₂-CH₂-NH-Rest bedeutet und x ≧ 2 und y ≧ 2 ist. Beispiele solcher Reste sind H₂N-(CH₂-)₃- und H₂N-(CH₂)₂-NH-(CH₂)₃-.
   (3) (R²O)₃Si-(CH₂)ₓ-NH-(CH₂)ₓ-. Beispiele solcher Reste sind (C₂H₅O)₃Si-(CH₂)₃-NH-(CH₂)₃- und (CH₃)₃Si-(CH₂)₂-NH-(CH₂)₂-.
   (4) R³ = Rest der allgemeinen Formel

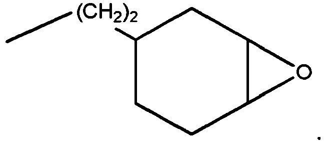

Dabei sind als Reste R³ diejenigen mit der Bedeutung -(CH₂)₃-NH₂, -(CH₂)₂-NH-(CH₂)₃-NH₂ oder (4) besonders bevorzugt.

Bestandteil A2) ist ein α,ω-Siloxanol der allgemeinen Formel

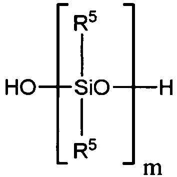

in dem R⁵ ein Methyl- oder Phenylrest ist. Mindestens 90 % der Reste R⁵ müssen Methylreste sein. Besonders bevorzugt sind α,ω-Dimethylsiloxanole. m hat einen Wert von 20 bis 250 und hat vorzugsweise einen Wert von 30 bis 80.

Das Verhältnis der Bestandteile A1) und A2) ist so einzustellen, dass einer SiOH-Gruppe der Verbindung A2) > 1 bis 3 OR²-Gruppen der Verbindung A1) entsprechen. Vorzugsweise beträgt das Verhältnis OH : OR² = 1 : 2. Die Silane A1 und/oder Siloxanole A2 können allein oder in beliebigen Mischungen miteinander eingesetzt werden.

Die Mischungen können als Lösungen Lösungsmittel wie beispielsweise Alkohole, insbesondere in Abwesenheit von Wasser, oder in Anwesenheit von Wasser in Form von Emulsionen vorliegen.

Diese Produkte können mit 0,1 -100 % aktiv in Wasser gelöst als Emulsion oder in Lösemitteln wie Alkoholen, Kohlenwasserstoffen gelöst vorliegen.

Diese Produkte können einen Aktivgehalt von 0,1 bis 99,9 Gew.-% an Silanen A1 und/oder an Siloxanolen A2 in Wasser gelöst bzw. emulgiert oder in Lösungsmitteln, wie z. B. Alkoholen oder Kohlenwasserstoffen, gelöst enthalten.

Eine Abänderung der Zubereitung nach der vorliegenden Erfindung ist dadurch gekennzeichnet, dass die Komponenten A1) und A2) nicht einzeln, sondern deren Umsetzungsprodukt enthalten ist, welches dadurch erhältlich ist, dass man vor der Emulgierung die Komponenten A1) und A2) unter Berücksichtigung der stöchiometrischen Verhältnisse durch Erhitzen auf 150 bis 200 °C ganz oder teilweise miteinander umsetzt. Es hat sich gezeigt, dass bei Verwendung einer solchen abgeänderten erfindungsgemäßen Zubereitung ebenfalls gute Ergebnisse in Bezug auf den Abperleffekt erzielt werden.

Als Hydrophobierungsmittel kann gegebenenfalls zusätzlich auch wenigstens eine organische Fettsäure oder wenigstens ein Salz einer organischen Fettsäure verwendet werden. Hierbei ist gleichermaßen auf die vorweg beispielhaft angeführten organischen Fettsäuren respektive Salze der organischen Fettsäuren zu verweisen.

Auch die Verwendung eines Mineralöls als Hydrophobierungsmittel ist ergänzend denkbar.

Gleiches gilt für die Verwendung eines Alkans als Hydrophobierungsmittel.

Auch die Verwendung von Bitumen als Hydrophobierungsmittel ist ergänzend denkbar.

Der Gehalt an Hydrophobierungsmitteln, gemessen in g, in der Emulsion sollte erfindungsgemäß 0,1 % - 2,5 %, insbesondere 0,3 % - 1 % der Menge an zu benetzendem Bims in g betragen. Das heißt, zur Hydrophobierung von 1 kg Bims ist beispielsweise bei Einwaage von 0,5 % Hydrophobierungsmittel eine Menge von 5 g beispielsweise an Hydrophobierungsmittel in der Emulsion. Auch die Menge an zu verwendender äußerer Phase, also beispielsweise Wasser, bemisst sich zweckmäßigerweise an Hand der Menge an zu benetzendem Bims. So sollte die Menge an äußerer Phase, insbesondere Wasser, gemessen in g, 1/5 - 1/3, insbesondere ¼ der Menge an zu benetzendem Bims, ebenfalls gemessen in g, betragen. Bezogen auf das Beispiel von 1 kg Bims sollten beispielsweise 250 g Wasser (= 250 ml Wasser) verwendet werden, in denen beispielsweise die oben angegebenen 5 g Hydrophobierungsmittel emulgiert werden.

In verschiedenen Untersuchungen und Vergleichstests wurden die Eigenschaften des erfindungsgemäßen Bimses überprüft und mit verschiedenen Vergleichsmaterialien verglichen.

Zunächst wurde eine bestimmte Menge an erfindungsgemäßem Bims hergestellt. Als Ausgangsmaterial wurde Bims der Bezeichnung "ROTOCELL" der ROTEC GmbH & Co. KG mit einer Körnung von 0,09 - 0,3 mm und einem Schüttgewicht von 390 kg/m³ +/- 15 % verwendet. Von diesem Bims wurden 400 g trocken eingewogen.

Sodann wurden zur Herstellung einer Emulsion 100 ml Wasser (= 100 g ≙ 25 % an Bimsmasse) abgemessen. Zu dem Wasser wurden 2 g Hydrophobierungsmittel, nämlich ein reaktives Organosiloxan/PDMS-Gemisch, erhältlich unter der Bezeichnung "Sitren 595" von der Firma Evonik Goldschmidt GmbH (2 g ≙ 0,5 % an Bimsmasse), zugegeben. Das Wasser und das Hydrophobierungsmittel wurden durch Schütteln vermischt und so das Hydrophobierungsmittel fein emulgiert. Die Menge an Wasser kann natürlich variiert werden. Wichtig ist, dass der zugegebene Gehalt an Hydrophobierungsmittel stets im geforderten Verhältnis zur zu benetzenden Bimsmasse steht, und auch vollständig dem Bims zugeführt wird. Je mehr Emulsion hergestellt wird, in der die bimsmassenbezogene Siloxanmenge emulgiert ist, desto mehr Emulsion muss also auch mit dem Bims vermischt werden.

Im nächsten Schritt wurde der Bims in einen Mischer gegeben, der den Bims mit einem Knethaken durchmischt. Mit Beginn des Mischens wurde die Emulsion unter Verwendung einer Sprühflasche aufgesprüht, während kontinuierlich gemischt wurde. Nach Beendigung des Aufsprühvorgangs nach ca. 5 Minuten wurde noch für 15 Minuten weitergerührt.

Am Ende des Rührens wurde der benetzte Bims entnommen und in einer Schale in einen Trockenschrank bei 150 °C zum Trocknen gegeben. Anschließend wurde der getrocknete Bims entnommen und an Raumluft abgekühlt.

In einem Langzeitversuch wurde zunächst das Wasseraufnahmevermögen des erfindungsgemäßen Bimses untersucht.

Hierzu wurde in zwei Standzylinder mit jeweils einem Ablesevolumen von 1000 ml jeweils eine Menge von exakt 500 ml destilliertem Wasser gegeben. In den einen Standzylinder wurden exakt 100 g Bims, erhältlich unter der Bezeichnung "ROTOCELL", mit einer Körnung von 0,09 - 0,3 mm, gegeben, der nicht erfindungsgemäß hydrophobiert war. In den anderen Standzylinder wurden exakt 100 g des wie oben beschrieben hergestellten hydrophobierten "ROTOCELL"-Bimses gegeben.

Der nicht hydrophobierte Bims ging nach Zugabe direkt unter. Nach Entweichen der Luft aus dem Porenvolumen des Bimses wurde ein Ablesevolumen von 620 ml festgestellt.

Der erfindungsgemäß hydrophobierte Bims hingegen sank nicht ab. Es wurde ein Ablesevolumen von 720 ml festgestellt.

Nach Aufgabe des Bimses und Erfassung der Ablesevolumina wurden die Standzylinder luftdicht mittels Folien verschlossen und erschütterungsfrei aufgestellt.

Die Proben wurden eine Woche stehen gelassen, wonach erneut die Ablesevolumina festgestellt wurden. Es wurden dieselben Ablesevolumina wie bei der ersten Ablesung unmittelbar nach Bimsaufgabe erfasst, d.h. bei dem den nichthydrophobierten Bims enthaltenden Standzylinder ein Volumen von 620 ml, bei dem den erfindungsgemäßen hydrophobierten Bims enthaltenden Zylinder ein Volumen von 720 ml. Es traten also keine Veränderungen auf.

Hieraus ergibt sich, dass der erfindungsgemäße hydrophobierte Bims keinerlei Wasser aufnimmt, das heißt, dass er vollständig hydrophob ist.

In einem weiteren Versuch wurden anhand dreier verschiedener Probekörper, von denen einer den erfindungsgemäßen und wie oben beschrieben hergestellten Bims enthielt, während die anderen zwei andere Zuschlagstoffe enthielten, hergestellt, wobei Eigenschaften der zunächst hergestellten Körpermasse sowie Eigenschaften der fertigen Körper untersucht wurden.

Als Ausgangsmaterial wurde ein handelsüblicher Fliesenkleber (Klebemörtel) basierend im Wesentlichen auf Zement (Portlandzement), feinkörnigen Zuschlagstoffen (Kalksteinmehl, Quarzsand) und Zusatzmitteln (Methylcellulose, Dispersionspulver, Cellulosefasern, Tonerdeschmelzzement) verwendet. Hiervon wurden drei Mörtelmengen zu jeweils exakt 600 g abgewogen.

Zur ersten Menge wurden 150 g eines handelsüblichen silikatischen Schaumes (Leichtschaum) mit einer Körnung von 0,1 - 0,3 mm hinzugegeben. Zur zweiten Mörtelmenge wurden 150 g des "ROTOCELL"-Bimses mit einer Körnung von 0,09 -0,3 mm, jedoch nicht hydrophobiert, zugegeben. Zur dritten Mörtelmenge wurden 150 g des oben beschriebenen erfindungsgemäßen "ROTOCELL"-Bimses, hydrophobiert, zugegeben.

Anschließend wurde jede Probe mit Wasser angemacht. Zur ersten Probe wurden 345 g Wasser gegeben, zur zweiten Probe 375 g und zur dritten Probe 345 g Wasser.

Sodann wurde zunächst die Ergiebigkeit der jeweiligen Proben vermessen. Die Ergiebigkeit betrug bei der ersten Probe enthaltend den silikatischen Schaum 870 ml. Die den unbehandelten Bims enthaltende Probe zeigte eine Ergiebigkeit von 815 ml. Die den erfindungsgemäßen Bims enthaltende Probe zeigte eine Ergiebigkeit von 900 ml. Das heißt, dass der erfindungsgemäße Bims zu einer Mörtelmasse mit der größten Ergiebigkeit geführt hat, was auf die hydrophobe Eigenschaft des Bimses und daraus resultierend seine Wasserverdrängung und seine homogene Verteilung in der Masse zurückzuführen ist.

Im Folgenden wurden die Frischrohdichten der angemachten Proben vermessen. Diese betrug bei der den silikatischen Schaum enthaltenden Probe 1,27 kg/dm³, bei der zweiten Probe, die den unbehandelten Bims enthält 1,27 kg/dm³ und bei der den erfindungsgemäßen Bims enthaltenden Probe 1,22 kg/dm³. Das heißt, dass die den erfindungsgemäßen Bims enthaltende Probe eine geringere Dichte aufwies.

Im nächsten Schritt wurde, gestützt auf die Testreihe für Fliesenkleber gemäß DIN EN12002, aus jeder Masse ein Probekörper in Form eines Mörtelprismas erstellt, um das Verformungsverhalten der Mörtel zu untersuchen. Das jeweilige Prisma hatte eine Länge von 160 mm, eine Breite von 80 mm und eine Höhe von 80 mm. Die jeweils hergestellten Prismen wurden über mehrere Tage getrocknet und anschließend vermessen.

Die einzelnen Messwerte sind, zusammen mit den jeweiligen Mengen der verwendeten Massebestandteile, in der nachfolgenden Tabelle wiedergegeben.

| Probe: | I | II | III |
|---|---|---|---|
| Leichtzuschlag: | Silikat. Schaum Körnung: 0,1-0,3 mm | Bims nicht hydrophobiert Körnung: 0,09-0,3 mm | Bims hydrophobiert Körnung: 0,09-0,3 mm |
| Klebemörtel (g): | 600 | 600 | 600 |
| Masse Zuschlag (g) | 150 | 150 | 150 |
| Wassermenge (g) | 345 | 375 | 345 |
| Ergiebigkeit (ml) | 870 | 850 | 900 |
| Frischrohdichte Mörtel (kg/dm³): | 1,27 | 1,27 | 1,22 |
| | | | |
| Probenkörper: Mörtelprisma L x B x H (mm): | 160x80x80 | 160x80x80 | 160x80x80 |
| Gewicht trocken (g) | 229 | 227 | 223 |
| Trockenrohdichte (kg/dm³): | 0,224 | 0,221 | 0,218 |
| Bruchlast Biegung (kN): | 0,487 | 0,408 | 0,449 |
| Biegezugfestigkeit (N/mm²): | 0,143 | 0,12 | 0,132 |
| Bruchlast Druck (kN): | 4,39 | 3,56 | 4,52 |
| Druckfestigkeit (N/mm²): | 0,7 | 0,6 | 0,71 |

Vermessen wurde zum einen das Trockengewicht der Körper. Dieses betrug bei dem den silikatischen Schaum enthaltenden Probekörper 229 g, bei dem den unbehandelten Bims enthaltenden Probekörper 227 g und bei dem den erfindungsgemäßen Bims enthaltenden Probekörper 223 g. Das heißt, dass der den erfindungsgemäßen Bims enthaltende Probekörper der leichteste aller Probekörper war.

Weiterhin wurde die Trockenrohdichte gemessen. Diese betrug bei dem den silikatischen Schaum enthaltenden Probekörper 0,224 kg/dm³, bei dem den unbehandelten Bims enthaltenden Probekörper 0,221 kg/dm³ und bei dem den erfindungsgemäßen Bims enthaltenden Probekörper 0,218 kg/dm³. Mithin zeigte der den erfindungsgemäßen Bims enthaltende Probekörper die niedrigste Trockenrohdichte.

Sodann wurde die Bruchlast bei Biegung, die Biegezugfestigkeit, die Bruchlast bei Druck sowie die Bruchfestigkeit vermessen. Die Messwerte sind im Einzelnen der Tabelle zu entnehmen.

Die Bruchlast der den silikatischen Schaum enthaltenden Probe betrug 0,487 kN. Während die Bruchlast der den unbehandelten Bims enthaltenden Probe mit 0,408 kN deutlicher unterhalb des Wertes der silikatischen Leichtschaum-Probe lag, wies die den erfindungsgemäßen Bims aufweisende Probe mit 0,449 kN einen Messwert auf, der annähernd im Bereich der silikatischen Leichtschaum-Probe lag.

Die Biegezugfestigkeit der silikatischen Schaum-Probe betrug 0,143 N/mm². Auch hier lag die den unbehandelten Bims aufweisende Probe mit 0,12 N/mm² deutlicher darunter, während die den erfindungsgemäßen Bims aufweisende Probe mit 0,132 N/mm² wiederum genähert im Bereich der silikatischen Schaum-Probe lag.

Bei der Bruchlast unter Druck zeigt die den erfindungsgemäßen Bims enthaltende Probe den höchsten Messwert mit 4,52 kN, während die den silikatischen Schaum enthaltende Probe einen Wert von 4,39 kN aufwies und die den unbehandelten Bims aufweisende Probe einen Wert von 3,56 kN. Auch bei der Druckfestigkeit wies die den erfindungsgemäßen Bims aufweisende Probe mit 0,71 N/mm² den höchsten Wert auf, verglichen mit 0,7 N/mm² bei der silikatischen Schaum-Probe und 0,6 N/mm² bei der den unbehandelten Bims aufweisenden Probe.

Der Vergleichsversuch zeigt, dass unter Verwendung des erfindungsgemäßen Bimses beispielsweise ein Fliesenkleber angemischt werden kann, der einerseits eine sehr gute Ergiebigkeit aufweist, und der andererseits, wie die verschiedenen Probekörper zeigten, sehr gute mechanische Eigenschaften aufweist, verglichen mit insbesondere dem Mörtel/Probekörper, der den silikatischen Schaum enthielt.

## Patentansprüche

1. Granularer Bims, **dadurch gekennzeichnet, dass** die Oberfläche mit einer hydrophoben Beschichtung belegt ist, welche aus einem Silan und einem Siloxan besteht, wobei
als Silan verwendet ist:
A1) Silan der allgemeinen Formel
R³-Si-(OR²)₃
wobei
R² ein Methyl- oder Ethylrest ist und
R³ ein Alkylrest mit 3 bis 12 Kohlenstoffatomen,
oder ein Aminoalkylrest mit 1 bis 6 Kohlenstoffatomen, oder
ein Rest der allgemeinen Formel H₂N-(CH₂)ₓR⁴-(CH₂)_{y}-, in der R⁴ einen Sauerstoff-, Schwefel-, -NH-
oder
-NH-CH₂-CH₂-NH-Rest bedeutet und
x ≧ 2 und
y ≧ 2 ist, oder
ein Rest der allgemeinen Formel
(R²O)₃Si-(CH₂)ₓ-NH-(CH₂)ₓ-,
R² und x wie vorstehend definiert,
oder 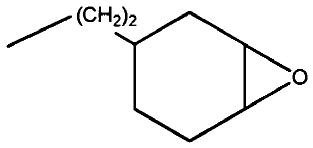 ist;
dass als Siloxan verwendet ist
A2) ein Siloxanol der allgemeinen Formel 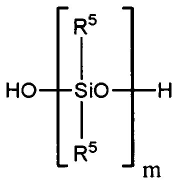 wobei
R⁵ ein Methyl- oder Phenylrest ist, jedoch mindestens 90 % der Reste R⁵ Methylreste sind und m = 20 bis 250 ist,
und dass ein verwendetes Gemisch aus einem Silan nach A1) und einem Siloxanol nach A2) besteht, wobei das Verhältnis von A1) zu A2) so gehalten ist, dass einer SiOH-Gruppe der Verbindung A2) > 1 bis 3 OR²-Gruppen der Verbindung A1) entsprechen und R² ein Alkylrest mit 1 bis 4 Kohlenstoffatomen ist.

2. Bims nach Anspruch 1, **dadurch gekennzeichnet, dass** die Beschichtung zusätzlich aus wenigstens einer organischen Fettsäure oder wenigstens einem Salz einer organischen Fettsäure besteht.

3. Bims nach Anspruch 1, **dadurch gekennzeichnet, dass** die Beschichtung zusätzlich aus einem Mineralöl oder einer Mineralölemulsion besteht.

4. Bims nach Anspruch 1, **dadurch gekennzeichnet, dass** die Beschichtung zusätzlich aus wenigstens einem Alkan besteht.

5. Bims nach Anspruch 1, **dadurch gekennzeichnet, dass** die Beschichtung zusätzlich aus Bitumen oder einer bituminösen Emulsion besteht.

6. Verfahren zur Herstellung von Bims nach einem der vorangehenden Ansprüche, **dadurch gekennzeichnet, dass** der granulare Bims mit einer Emulsion enthaltend wenigstens ein in der äußeren Phase verteiltes, die innere Phase bildendes Hydrophobierungsmittel benetzt und anschließend getrocknet wird, wobei das Hydrophobierungsmittel auf der Oberfläche der Bimsgranulen eine hydrophobe Beschichtung bildet, welche aus einem Silan und einem Siloxan besteht, wobei als Silan verwendet wird:
A1) Silan der allgemeinen Formel
R³-Si-(OR²)₃
wobei
R² ein Methyl- oder Ethylrest ist und
R³ ein Alkylrest mit 3 bis 12 Kohlenstoffatomen,
oder ein Aminoalkylrest mit 1 bis 6 Kohlenstoffatomen, oder
ein Rest der allgemeinen Formel H₂N-(CH₂)ₓR⁴-(CH₂)_{y}-, in der R⁴ einen Sauerstoff-, Schwefel-, -NH-
oder
-NH-CH₂-CH₂-NH-Rest bedeutet und
x ≧ 2 und
y ≧ 2 ist, oder
ein Rest der allgemeinen Formel
(R²O)₃Si-(CH₂)ₓ-NH-(CH₂)ₓ-,
R² und x wie vorstehend definiert,
oder 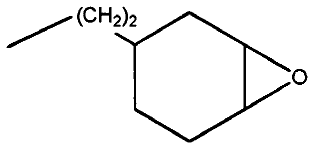 ist;
dass als Siloxan verwendet wird
A2) ein Siloxanol der allgemeinen Formel 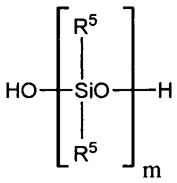 wobei
R⁵ ein Methyl- oder Phenylrest ist, jedoch mindestens 90 % der Reste R⁵ Methylreste sind und m = 20 bis 250 ist.

7. Verfahren nach Anspruch 6, **dadurch gekennzeichnet, dass** die Emulsion aufgesprüht wird.

8. Verfahren nach Anspruch 6 oder 7, **dadurch gekennzeichnet, dass** der Bims während und nach Zugabe der Emulsion gemischt wird.

9. Verfahren nach Anspruch 8, **dadurch gekennzeichnet, dass** die Mischdauer zwischen 1 min - 25 min, insbesondere 10 min - 15 min beträgt.

10. Verfahren nach einem der Ansprüche 6 bis 9, **dadurch gekennzeichnet, dass** der benetzte Bims bei einer Temperatur zwischen 0° - 200°C, bevorzugt zwischen 130° - 180°C, insbesondere bei etwa 150°C getrocknet wird.

11. Verfahren nach einem der Ansprüche 6 bis 10, **dadurch gekennzeichnet, dass** zusätzlich ein Hydrophobierungsmittel aus wenigstens einer organischen Fettsäure oder wenigstens einem Salz einer organischen Fettsäure verwendet wird.

12. Verfahren nach einem der Ansprüche 6 bis 10, **dadurch gekennzeichnet, dass** als Hydrophobierungsmittel zusätzlich Mineralöl verwendet wird.

13. Verfahren nach einem der Ansprüche 6 bis 10, **dadurch gekennzeichnet, dass** als Hydrophobierungsmittel zusätzlich ein Alkan verwendet wird.

14. Verfahren nach einem der Ansprüche 6 bis 10, **dadurch gekennzeichnet, dass** als Hydrophobierungsmittel zusätzlich Bitumen verwendet wird.

15. Verfahren nach einem der Ansprüche 6 bis 14, **dadurch gekennzeichnet, dass** die äußere Phase Wasser ist.

16. Verfahren nach einem der Ansprüche 6 bis 15, **dadurch gekennzeichnet, dass** der Gehalt in g an Hydrophobierungsmittel in der Emulsion 0,1%-2,5%, insbesondere 0,3% - 1 % der Menge an zu benetzendem Bims in g beträgt.

17. Verfahren nach einem der Ansprüche 6 bis 16, **dadurch gekennzeichnet, dass** die Menge in g an äußerer Phase, insbesondere Wasser 1/5 - 1/3, insbesondere 1/4 der Menge in g an zu benetzendem Bims beträgt.

## Claims

1. Granular pumice, **characterized in that** the surface is coated with a hydrophobic coating which consists of a silane and a siloxane,
where
as silane, use is made of:
A1) silane of the general formula
R³-Si-(OR²)₃
where
R² is a methyl or ethyl radical and
R³ is an alkyl radical having from 3 to 12 carbon atoms,
or an aminoalkyl radical having from 1 to 6 carbon atoms or
a radical of the general formula H₂N-(CH₂)ₓR⁴-(CH₂)_{y}-, where
R⁴ is an oxygen, sulfur, -NH-
or
-NH-CH₂-CH₂-NH- radical and
x ≧ 2 and
y ≧ 2, or
a radical of the general formula
(R²O)₃Si-(CH₂)ₓ-NH-(CH₂)ₓ-,
R² and x are as defined above,
or 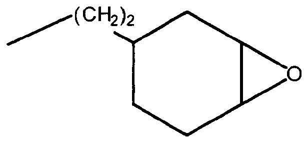 ;
and as siloxane, use is made of
A2) a siloxanol of the general formula 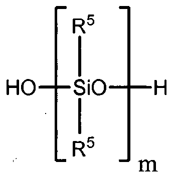 where
R⁵ is a methyl or phenyl radical but at least 90% of the radicals R⁵ are methyl radicals and m = 20 to 250,
and **in that** a mixture used consists of a silane as per A1) and a siloxanol as per A2), where the ratio of A1) to A2) is kept so that one SiOH group of the compound A2) corresponds to from > 1 to 3 OR² groups of the compound A1) and R² is an alkyl radical having from 1 to 4 carbon atoms.

2. Pumice according to Claim 1, **characterized in that** the coating additionally consists of at least one organic fatty acid or at least one salt of an organic fatty acid.

3. Pumice according to Claim 1, **characterized in that** the coating additionally consists of a mineral oil or a mineral oil emulsion.

4. Pumice according to Claim 1, **characterized in that** the coating additionally consists of at least one alkane.

5. Pumice according to Claim 1, **characterized in that** the coating additionally consists of bitumen or a bituminous emulsion.

6. Process for producing pumice according to any of the preceding claims, **characterized in that** the granular pumice is wetted with an emulsion containing at least one hydrophobicizing agent which is distributed in the outer phase and forms the inner phase and the granular pumice is subsequently dried, with the hydrophobicizing agent forming a hydrophobic coating on the surface of the pumice granules, which coating consists of a silane and a siloxane, where as silane, use is made of:
A1) silane of the general formula
R³-Si-(OR²)₃
where
R² is a methyl or ethyl radical and
R³ is an alkyl radical having from 3 to 12 carbon atoms,
or an aminoalkyl radical having from 1 to 6 carbon atoms or
a radical of the general formula H₂N-(CH₂)ₓR⁴-(CH₂)_{y}-, where
R⁴ is an oxygen, sulfur, -NH-
or
-NH-CH₂-CH₂-NH- radical and
x ≧ 2 and
y ≧ 2, or
a radical of the general formula
(R²O)₃Si-(CH₂)ₓ-NH-(CH₂)ₓ-,
R² and x are as defined above,
or 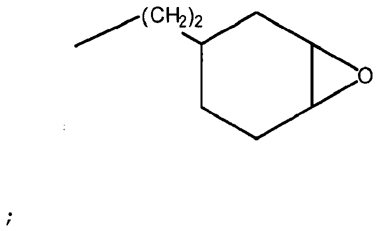 **in that** as siloxane, use is made of
A2) a siloxanol of the general formula 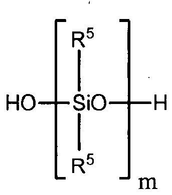 where
R⁵ is a methyl or phenyl radical but at least 90% of the radicals R⁵ are methyl radicals and m = 20 to 250.

7. Process according to Claim 6, **characterized in that** the emulsion is sprayed on.

8. Process according to Claim 6 or 7, **characterized in that** the pumice is mixed during and after addition of the emulsion.

9. Process according to Claim 8, **characterized in that** the mixing time is 1 min - 25 min, in particular 10 min - 15 min.

10. Process according to any of Claims 6 to 9, **characterized in that** the wetted pumice is dried at a temperature of 0°-200°C, preferably 130°-180°C, in particular at about 150°C.

11. Process according to any of Claims 6 to 10, **characterized in that** a hydrophobicizing agent composed of at least one organic fatty acid or at least one salt of an organic fatty acid is additionally used.

12. Process according to any of Claims 6 to 10, **characterized in that** mineral oil is additionally used as hydrophobicizing agent.

13. Process according to any of Claims 6 to 10, **characterized in that** an alkane is additionally used as hydrophobicizing agent.

14. Process according to any of Claims 6 to 10, **characterized in that** bitumen is additionally used as hydrophobicizing agent.

15. Process according to any of Claims 6 to 14, **characterized in that** the outer phase is water.

16. Process according to any of Claims 6 to 15, **characterized in that** the content in g of hydrophobicizing agent in the emulsion is 0.1%-2.5%, in particular 0.3%-1%, of the amount of pumice to be wetted in g.

17. Process according to any of Claims 6 to 16, **characterized in that** the amount in g of outer phase, in particular water, is 1/5-1/3, in particular 1/4, of the amount in g of pumice to be wetted.

## Revendications

1. Pierre ponce granulaire, **caractérisée en ce que** la surface est revêtue d'un revêtement hydrophobe, qui est constitué par un silane et un siloxane, en utilisant, comme silane :
A1) un silane de formule générale
R³Si-(OR²)₃
où
R² représente un radical méthyle ou éthyle et
R³ représente un radical alkyle comprenant 3 à 12 atomes de carbone,
ou un radical aminoalkyle comprenant 1 à 6 atomes de carbone, ou
un radical de formule générale H₂N-(CH₂)ₓR⁴-(CH₂)_{y}-, dans laquelle R⁴ signifie un radical oxygène, soufre, -NH
ou
-NH-CH₂-CH₂-NH et
x ≥ 2 et
y ≥ 2, ou
un radical de formule générale
(R²O)₃Si-(CH₂)ₓ-NH-(CH₂)ₓ-,
R² et x étant tels que définis ci-dessus,
ou 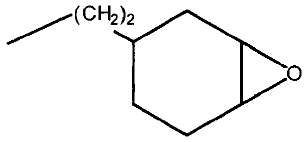 ;
qui est utilisé comme siloxane
A2) un siloxanol de formule générale 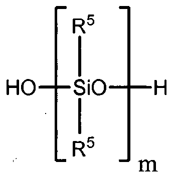 où
R⁵ représente un radical méthyle ou phényle, mais au moins 90% des radicaux R⁵ étant des radicaux méthyle et m = 20 à 250,
et **en ce qu'**un mélange utilisé est constitué par un silane selon A1) et un siloxanol selon A2), le rapport de A1) à A2) étant maintenu de manière telle qu'un groupe SiOH du composé A2) correspond à > 1 à 3 groupes OR² du composé A1) et R² représente un radical alkyle comprenant 1 à 4 atomes de carbone.

2. Pierre ponce selon la revendication 1, **caractérisée en ce que** le revêtement est en plus constitué par au moins un acide gras organique ou au moins un sel d'un acide gras organique.

3. Pierre ponce selon la revendication 1, **caractérisée en ce que** le revêtement est en plus constitué par une huile minérale ou une émulsion d'huile minérale.

4. Pierre ponce selon la revendication 1, **caractérisée en ce que** le revêtement est en plus constitué par au moins un alcane.

5. Pierre ponce selon la revendication 1, **caractérisée en ce que** le revêtement est en plus constitué par du bitume ou une émulsion bitumineuse.

6. Procédé pour la préparation de pierre ponce selon l'une quelconque des revendications précédentes, **caractérisé en ce que** la pierre ponce granulaire est mouillée par une émulsion contenant au moins un agent d'hydrofugation réparti dans la phase externe, formant la phase interne et est ensuite séchée, l'agent d'hydrofugation formant un revêtement hydrophobe à la surface des granules de pierre ponce, constitué par un silane et un siloxane, en utilisant comme silane :
A1) un silane de formule générale
R³-Si-(OR²)₃
où
R² représente un radical méthyle ou éthyle et
R³ signifie un radical alkyle comprenant 3 à 12 atomes de carbone,
ou un radical aminoalkyle comprenant 1 à 6 atomes de carbone, ou
un radical de formule générale H₂N-(CH₂)ₓR⁴-(CH₂)_{y}-, dans laquelle R⁴ signifie un radical oxygène, soufre, -NH
ou
-NH-CH₂-CH₂-NH et
x ≥ 2 et
y ≥ 2, ou
un radical de formule générale
(R²O)₃Si-(CH₂)ₓ-NH-(CH₂)ₓ-,
R² et x étant tels que définis ci-dessus,
ou 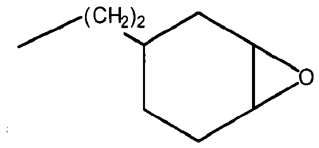 ;
qui est utilisé comme siloxane
A2) un siloxanol de formule générale 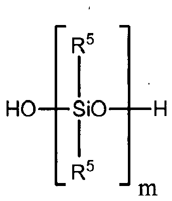 où
R⁵ représente un radical méthyle ou phényle, mais au moins 90% des radicaux R⁵ étant des radicaux méthyle et m = 20 à 250.

7. Procédé selon la revendication 6, **caractérisé en ce que** l'émulsion est pulvérisée.

8. Procédé selon la revendication 6 ou 7, **caractérisé en ce que** la pierre ponce est mélangée pendant et après l'addition de l'émulsion.

9. Procédé selon la revendication 8, **caractérisé en ce que** la durée de mélange est comprise entre 1 min-25 min, en particulier entre 10 min-15 min.

10. Procédé selon l'une quelconque des revendications 6 à 9, **caractérisé en ce que** la pierre ponce mouillée est séchée à une température entre 0-200°C, de préférence entre 130-180°C, en particulier à environ 150°C.

11. Procédé selon l'une quelconque des revendications 6 à 10, **caractérisé en ce qu'**on utilise en plus un agent d'hydrofugation constitué par au moins un acide gras organique ou un moins un sel d'un acide gras organique.

12. Procédé selon l'une quelconque des revendications 6 à 10, **caractérisé en ce qu'**on utilise, comme agent d'hydrofugation, en plus de l'huile minérale.

13. Procédé selon l'une quelconque des revendications 6 à 10, **caractérisé en ce qu'**on utilise, comme agent d'hydrofugation, en plus un alcane.

14. Procédé selon l'une quelconque des revendications 6 à 10, **caractérisé en ce qu'**on utilise, comme agent d'hydrofugation, en plus du bitume.

15. Procédé selon l'une quelconque des revendications 6 à 14, **caractérisé en ce que** la phase externe est de l'eau.

16. Procédé selon l'une quelconque des revendications 6 à 15, **caractérisé en ce que** la teneur, en g, d'agent d'hydrofugation dans l'émulsion représente 0,1%-2,5%, en particulier 0,3%-1% de la quantité de la pierre ponce à mouiller en g.

17. Procédé selon l'une quelconque des revendications 6 à 16, **caractérisé en ce que** la quantité, en g, de phase externe, en particulier l'eau, représente 1/5-1/3, en particulier 1/4 de la quantité, en g, de la pierre ponce à mouiller.
